# EUROPÄISCHE PATENTSCHRIFT

(11) **EP 2 470 940 B1**
(45) Veröffentlichungstag und Bekanntmachung des Hinweises auf die Patenterteilung: **22.02.2017**
(21) Anmeldenummer: 10747427.2
(22) Anmeldetag: 21.08.2010
(51) Int. Cl.: G02C 5/22, B23K 26/26, B23K 26/32, B23K 103/00, B23K 103/04, B23K 103/08, B23K 103/14, B23K 26/242

(54) **BRILLE, VORRICHTUNG MIT EINEM BRILLENELEMENT UND EINEM SCHARNIERTEIL, UND VERFAHREN ZUM BEFESTIGEN EINES SCHARNIERTEILS AUF EINEM BRILLENELEMENT**
SPECTACLES, DEVICE HAVING A SPECTACLES ELEMENT AND A HINGE PART, AND METHOD FOR FASTENING A HINGE PART TO A SPECTACLES ELEMENT
LUNETTES, DISPOSITIF PRÉSENTANT UN ÉLÉMENT DE LUNETTES ET UN ÉLÉMENT DE CHARNIÈRE, ET PROCÉDÉ DE FIXATION D'UN ÉLÉMENT DE CHARNIÈRE SUR UN ÉLÉMENT DE LUNETTES

(30) Priorität: 28.08.2009 DE 102009039959; 25.09.2009 DE 102009048496
(43) Veröffentlichungstag der Anmeldung: 04.07.2012
(73) Patentinhaber: Wagner, Reiner, 75228 Ispringen (DE)
(72) Erfinder: Wagner, Reiner, 75228 Ispringen (DE)
(74) Vertreter: Gleiss, Alf-Olav
(86) Internationale Anmeldenummer: PCT/EP2010/005143
(87) Internationale Veröffentlichungsnummer: WO 2011/023345

(56) Entgegenhaltungen:
- EP-A1- 0 615 149
- EP-A1- 0 679 920
- EP-A1- 1 518 633
- WO-A1-02/46831
- WO-A2-2008/087050
- DE-A1- 19 703 293
- JP-A- 2007 222 891

## Beschreibung

Die Anmeldung betrifft eine Vorrichtung gemäß Oberbegriff des Anspruchs 1, eine Brille gemäß Oberbegriff des Anspruchs 5 und ein Verfahren zum Befestigen eines Scharnierteils auf einem Brillenelement gemäß Anspruch 6.

Brillen der hier angesprochenen Art sind bekannt. Sie weisen ein Mittelteil und mindestens einen Bügel auf. Um die Brille platzsparend beispielsweise in einem Etui unterbringen zu können, ist der Bügel von einer Trageposition, in der seine Längserstreckung im Wesentlichen einen Winkel von 90° zu einer Ebene aufweist, die durch das Mittelteil definiert wird, in eine Ruheposition schwenkbar, in der der Bügel im Wesentlichen parallel zum Mitteilteil ausgerichtet ist. Hierzu ist der mindestens eine Bügel mit dem Mittelteil über ein Scharnier schwenkbeweglich verbunden. Das Scharnier umfasst zwei Scharnierteile, von denen ein erstes auf dem mindestens einen Bügel und ein zweites auf dem Mittelteil angeordnet ist. Bei bekannten Brillen kann vorgesehen sein, dass das Scharnier mit seinem ersten Scharnierteil auf den Bügel und mit seinem zweiten Scharnierteil auf das Mittelteil geschweißt wird. Es ist auch möglich, nur eines der Scharnierteile auf dem zugeordneten Brillenelement, welches als Brillenbügel oder Mittelteil ausgebildet sein kann, zu schweißen, während das andere Scharnierteil in anderer Weise auf dem zugeordneten Brillenelement befestigt ist. Als typische Schweißmethode kommt beispielsweise elektrisches Widerstandsschweißen zur Anwendung, wobei bevorzugt an den Scharnierteilen Schweißwarzen vorgesehen sind. Diese Schweißmethode ist nachteilig, weil eine Verbindung zwischen den Scharnierteilen und den zugeordneten Brillenelementen nur an definierten Schweißpunkten erfolgt. Hierdurch können sich Spalte ausbilden, so dass insbesondere das Gehäuse eines Scharniers nicht flüssigkeits- oder gasdicht verschlossen ist. Außerdem sind zur Schweißung hohe Anpressdrücke erforderlich, weshalb die Scharniere eine vergleichsweise große Wandstärke aufweisen müssen, um die Kräfte ohne Verformung aufnehmen zu können. Beim Laserschweißen treten die genannten Nachteile nicht auf. Trotzdem findet diese Methode in Zusammenhang mit Brillen nur in geringem Maße Anwendung, weil verschiedene in diesem Bereich bevorzugte Materialien durch Laserschweißen nur begrenzt miteinander verbindbar sind. Dies ist vor allem deswegen der Fall, weil als Schweißmethode üblicherweise das sogenannte Tiefschweißen eingesetzt wird. Dabei arbeitet der Schweißlaser mit hoher Strahlintensität in einer Größenordnung von beispielsweise mehreren Megawatt pro Quadratzentimeter, wobei sich in der Schmelze in Strahlrichtung eine Dampfkapillare ausbildet, die sich in die Tiefe des Werkstücks erstreckt. Umfasst das Material eines Scharnierteils oder Brillenelements beispielsweise Zink, wie es bei Neusilber der Fall ist, kann der beim Tiefschweißen entstehende Zinkdampf oxidieren, so dass sich im Bereich der Schweißnaht Zinkoxid ausbildet. Dies führt zu einer Versprödung der Naht, so dass diese leicht aufplatzen, beziehungsweise das aufgeschweißte Scharnierteil leicht abgebrochen werden kann.

Aufgabe der Erfindung ist es, eine Brille zu schaffen, bei der zumindest ein Scharnierteil durch Laserschweißen auf einem Brillenelement befestigt werden kann, wobei keine Einschränkung der miteinander verschweißbaren Materialien auftritt, insbesondere keine Versprödung der Naht erfolgt, wenn eines der zu verschweißenden Materialien Zink oder andere oxidationsempfindliche Stoffe umfasst.

Die Aufgabe wird gelöst durch eine Vorrichtung mit den Merkmalen des Anspruchs 1. Diese zeichnet sich dadurch aus, dass zumindest eines der Scharnierteile durch Laserschweißen, insbesondere Nahtschweißen, auf dem Mittelteil oder dem Bügel befestigt ist. Der Begriff "Nahtschweißen" spricht hier an, dass mit Hilfe des Schweißlasers nicht einzelne Schweißpunkte erzeugt werden, sondern dass zumindest eine Naht erzeugt wird, deren Längserstreckung größer ist als ihre Breite, so dass hier jedenfalls kein einzelner Schweißpunkt vorliegt. Zumindest an einer Längskante des Scharnierteils ist eine durchgehende Schweißnaht ausgebildet, die durch Wärmeleitungsschweißen erzeugt ist. Der Begriff "durchgehend" spricht an, dass die Schweißnaht nicht durch Bestrahlung voneinander abgesetzter, gegebenenfalls überlappender aufeinanderfolgender Bereiche erzeugt wird, sondern kontinuierlich entlang ihrer Längserstreckung. Dazu werden ein Laserstrahl und die zu verschweißenden Teile bevorzugt mit im Wesentlichen konstanter Geschwindigkeit relativ zueinander bewegt, wobei der Laserstrahl entlang der Längserstreckung der zu erzeugenden Naht eine im Wesentlichen konstante Leistung und/oder Intensität aufweist. Die Laserleistung beziehungsweise Intensität und/oder die Relativgeschwindigkeit zwischen dem Laserstrahl und den zu verschweißenden Teilen werden bevorzugt in Abhängigkeit von der zu erzeugenden Nahtlänge variiert. Der Begriff "Wärmeleitungsschweißen" spricht an, dass eine Strahlintensität verwendet wird, die deutlich geringer ist als eine Intensität, die typischerweise beim Tiefschweißen zum Einsatz kommt. Die für das Wärmeleitungsschweißen gewählte Intensität reicht nicht aus, um eine Dampfkapillare zu erzeugen. Oxidationsempfindliche Materialien werden also nicht in einem Ausmaß verdampft, das zu kritischen Mengen von Oxiden dieser Materialien in der gebildeten Schweißnaht führt. Insbesondere wird der Wärmeeintrag pro Zeiteinheit in das zu schweißende Material verringert, so dass sich eine Schmelze ohne nennenswerten Dampfanteil bilden kann. Außerdem werden große Temperaturgradienten vermieden. Dies führt dazu, dass die Naht nicht versprödet, so dass eine im Vergleich zum Stand der Technik stabilere Verbindung der miteinander verschweißten Teile resultiert, insbesondere, wenn oxidationsempfindliche Materialien zum Einsatz kommen.

Bevorzugt wird ein Ausführungsbeispiel einer Brille, bei der die Schweißnaht durch einen Dauerstrichlaser erzeugt ist. Im Unterschied zu den typischerweise eingesetzten Pulslasern mit vergleichsweise kurzer Pulsdauer ermöglicht ein Dauerstrichlaser ohne Weiteres einen kontinuierlichen, vergleichsweise geringen Wärmeeintrag, so dass keine nennenswerte Dampfentwicklung eintritt und eine Versprödung der Naht durch oxidationsempfindliche Materialien vermieden wird. Die Leistung und/oder Intensität des Laserstrahls wird entlang der Längserstreckung der zu erzeugenden Naht im Wesentlichen konstant gehalten.

Besonders bevorzugt wird aber auch ein Ausführungsbeispiel, bei der die Schweißnaht mit einem gepulsten Laser erzeugt wird, wobei sie entlang ihrer Erstreckung innerhalb der Zeitdauer eines einzigen Laserpulses erzeugt ist. Bei bekannten Schweißverfahren mit Hilfe gepulster Laser wird eine vergleichsweise kurze Pulslänge verwendet, bei der der Wärmeeintrag in das zu schweißende Material sehr hoch ist. Hierdurch entstehen große Temperaturgradienten, und es kommt zur Ausbildung einer Dampfkapillare. Beim Gegenstand der Erfindung wird im Unterschied hierzu die Pulslänge gedehnt, so dass anstelle eines einzigen Schweißpunkts pro Puls eine durchgehende Naht entlang ihrer Erstreckung innerhalb der Zeitdauer des Pulses erzeugt wird. Auch so wird ein kontinuierlicher, reduzierter Wärmeeintrag erreicht, so dass eine schädliche Dampfentwicklung vermieden werden kann. Dadurch, dass die Schweißnaht durchgehend entlang ihrer Erstreckung innerhalb der Zeitdauer eines einzigen Pulses erzeugt wird, entsteht nicht das typische Erscheinungsbild einer Schweißraupe, das nebeneinander überlappend angeordnete, einzelne Schweißpunkte zeigt, die üblicherweise durch eine Folge von Laserpulsen erzeugt werden. Stattdessen weist die mit einem einzigen Puls entlang ihrer Erstreckung kontinuierlich erzeugte Naht ein durchgehendes, kontinuierliches Erscheinungsbild auf, das dem einer mit einem Dauerstrichlaser erzeugten oder gelöteten Schweißnaht gleicht. Die Leistung und/oder Intensität des Laserpulses ist entlang der Längserstreckung der zu erzeugenden Naht im Wesentlichen konstant, wobei gewisse Variationen dieser Parameter während der Pulsdauer auftreten können. So zeigt beispielsweise die Leistung eines gepulsten Lasers während einer Pulsdauer stets einen zeitlichen Verlauf, der nicht beliebig an eine Konstante angenähert werden kann. Es wird versucht, die Leistung und/oder Intensität entlang der Erstreckung der zu erzeugenden Naht so konstant wie möglich zu halten. Dies soll einen kontinuierlichen Wärmeeintrag über die gesamte Nahtlänge sicherstellen. Weitere vorteilhafte Ausgestaltungen ergeben sich aus den Unteransprüchen.

Bekannte Vorrichtungen umfassen ein als Brillenbügel oder Mittelteil einer Brille ausgebildetes Brillenelement und ein Scharnierteil. Das Scharnierteil kann auf das Brillenelement geschweißt werden, wobei die hier bereits in Zusammenhang mit der Brille angesprochenen Nachteile auftreten.

Aufgabe der Erfindung ist es daher, eine Brille zu schaffen, bei der das Scharnierteil mit Hilfe eines Laserschweißverfahrens auf dem Brillenelement befestigt ist, wobei die in Zusammenhang mit der Brille geschilderten Nachteile nicht auftreten.

Die Aufgabe wird gelöst durch eine Brille mit den Merkmalen des Anspruchs 5. Diese zeichnet sich dadurch aus, dass das Scharnierteil auf dem Brillenelement angeordnet und durch Laserschweißen, insbesondere Nahtschweißen, befestigt ist. Zumindest an einer Längskante des Scharnierteils ist eine durchgehende Schweißnaht ausgebildet, die durch Wärmeleitungsschweißen erzeugt ist. Hierdurch wird, wie bereits in Zusammenhang mit der Brille beschrieben, ein reduzierter, kontinuierlicher Wärmeeintrag in die zu verschweißenden Materialien erreicht, so dass insbesondere die Dampfbildung oxidationsempfindlicher Materialien reduziert wird. Die Vorrichtung kann dadurch eine Vielzahl von Materialien umfassen, die bisher zumindest nicht mit Hilfe eines Laserschweißverfahrens verschweißt werden konnten.

Weitere vorteilhafte Ausgestaltungen ergeben sich aus den Unteransprüchen.

Bekannte Verfahren zum Befestigen eines Scharnierteils auf einem Brillenelement umfassen die folgenden Schritte: Zunächst wird das Scharnierteil auf dem Brillenelement angeordnet. Typischerweise erfolgt dann eine Befestigung des Scharnierteils mit Hilfe eines Schweiß- oder Lötverfahrens. Lötverfahren sind nachteilig, weil hierbei das gesamte Scharnierteil sehr stark erwärmt wird, so dass insbesondere Federscharniere in ihrer Funktion beeinträchtigt werden können. Diese können daher nicht als Baugruppe auf das Brillenelement gelötet werden, sondern es muss zunächst ein Gehäuse angelötet werden, wobei weitere Elemente nach der Befestigung des Gehäuses in dieses eingebracht werden. Das Gehäuse des Scharnierteils muss außerdem eine gewisse Wandstärke aufweisen, um nicht aufgrund der starken Erwärmung verformt zu werden. Verfahren, die auf elektrischem Widerstandsschweißen oder Laserschweißen beruhen, weisen die bereits in Zusammenhang mit der Brille und der Vorrichtung angesprochenen Nachteile auf.

Aufgabe der Erfindung ist es daher, ein Verfahren zu schaffen, welches insbesondere das Befestigen relativ schmaler und dünnwandiger Scharnierteile auf einem Brillenelement ermöglicht, wobei die Scharnierteile als Baugruppe auf dem Brillenelement befestigt werden können. Eine starke Erwärmung oder hohe mechanische Anpresskräfte auf das Scharnierteil sollen dabei vermieden werden. Gleichzeitig sollen die in Zusammenhang mit der Brille diskutierten Nachteile eines bekannten Laserschweißverfahrens vermieden werden, so dass die zu verschweißenden Materialien nahezu beliebig wählbar sind, ohne dass eine Versprödung der Schweißnaht durch Bildung unerwünschter Oxidationsprodukte erfolgt.

Die Aufgabe wird gelöst durch ein Verfahren mit den Merkmalen des Anspruchs 6, das sich durch die folgenden Schritte auszeichnet: Es wird eine durchgehende Schweißnaht zumindest entlang einer Längskante des Scharnierteils erzeugt, wobei die Schweißnaht durch Wärmeleitungsschweißen erzeugt wird. Wärmeleitungsschweißen mit Hilfe eines Schweißlasers ermöglicht einen sehr lokalen, relativ geringen und kontinuierlichen Wärmeeintrag in die zu verschweißenden Teile, so dass diese sich weder aufgrund zu starker Erwärmung verformen noch ihre Funktion einbüßen. Gleichzeitig sind keine hohen Anpresskräfte nötig, so dass ein mit dem Verfahren zu schweißendes Scharnierteil relativ schmal und dünnwandig ausgebildet sein kann. Der das Wärmeleitungsschweißen kennzeichnende relativ geringe Wärmeeintrag, der kontinuierlich entlang der Längserstreckung der zu erzeugenden Naht erfolgt, vermeidet zumindest weitestgehend eine Dampfbildung insbesondere oxidationsempfindlicher Materialien, so dass keine Versprödung der zu bildenden Schweißnaht auftritt.

Zur Erzeugung der Schweißnaht werden ein Laserstrahl und die zu verschweißenden Teile relativ zueinander entlang der Längserstreckung der zu erzeugenden Naht bevorzugt mit im Wesentlichen konstanter Geschwindigkeit bewegt. Dabei werden die Laserleistung und/oder Laserintensität im Wesentlichen konstant gehalten, um einen kontinuierlichen Wärmeeintrag über die gesamte Nahtlänge zu gewährleisten. Laserleistung, Laserintensität und/oder Relativgeschwindigkeit können bevorzugt abhängig von der zu erzeugenden Nahtlänge variiert werden.

Im Vergleich zu bekannten lasergeschweißten Nähten, die mithilfe einer Folge von Laserpulsen erzeugt werden und deshalb eine sogenannte Schweißraupe aufweisen, hat die während eines einzigen Laserpulses erzeugte Naht eher das Erscheinungsbild einer Lötverbindung. Auf Zusatzstoffe wie beispielsweise Lot kann allerdings ohne Weiteres verzichtet werden, so dass das Verfahren ohne eine Verwendung umweltschädlicher Substanzen auskommen kann.

Bevorzugt wird aber auch ein Ausführungsbeispiel, bei dem ein Zusatzwerkstoff zum Erzeugen der Schweißnaht verwendet wird. Hier kann beispielsweise eines der Materialien zum Einsatz kommen, die von mindestens einem der zu verschweißenden Teile umfasst sind. Es kann aber auch mindestens ein weiteres Material verwendet werden, welches beispielsweise einen niedrigeren Schmelzpunkt als die zu verschweißenden Materialien aufweist, wodurch die Intensität des Schweißlasers und damit der Wärmeeintrag weiter reduziert werden kann.

Es wird auch ein Verfahren bevorzugt, bei dem die Schweißnaht nach ihrer Erzeugung mit einem Laserstrahl geringerer Intensität nachbearbeitet wird. Auf diese Weise kann das Erscheinungsbild der Schweißnaht insbesondere in ästhetischer Hinsicht verbessert beziehungsweise optimiert werden. Die Schweißnaht kann beispielsweise geglättet werden. Es ist auch möglich, den Übergang der Schweißnaht in die miteinander verschweißten Teile kontinuierlicher auszubilden, das heißt insbesondere die Ränder der Naht zu glätten.

Die Erfindung wird im Folgenden anhand der Zeichnung näher erläutert.

Es zeigen:
- Figur 1: eine Brille mit einem Mittelteil und zwei Bügeln;
- Figur 2: eine erste Ansicht eines Laserschweißverfahrens zum Befestigen eines Scharnierteils auf einem Brillenelement;
- Figur 3: eine zweite Ansicht eines Laserschweißverfahrens;
- Figur 4: eine weitere Ansicht eines Laserschweißverfahrens;
- Figur 5: ein Ausführungsbeispiel eines fertig geschweißten Scharniers;
- Figur 6: ein bevorzugtes Ausführungsbeispiel eines als Federscharnier ausgebildeten Scharnierteils, das auf ein Brillenelement geschweißt ist;
- Figur 7: eine vormontierte Baugruppe des Federscharniers gemäß Figur 6, die ein Scharnierelement und ein Federelement umfasst;
- Figur 8: ein Gehäuse des Federscharniers gemäß Figur 6;
- Figur 9: eine in das Gehäuse gemäß Figur 8 eingesetzte Baugruppe gemäß Figur 7.

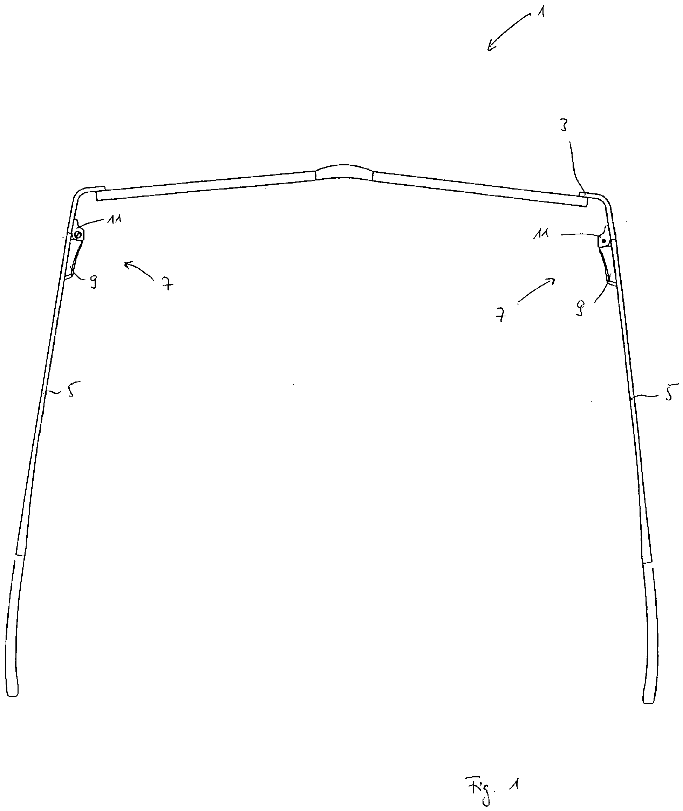

Figur 1 zeigt eine Brille 1, die ein Mittelteil 3 und mindestens einen Bügel 5 umfasst. Bei dem dargestellten Ausführungsbeispiel sind genau zwei Bügel 5 vorgesehen. Der mindestens eine Bügel 5 ist mit dem Mittelteil 3 über ein Scharnier 7 schwenkbeweglich verbunden. Das Scharnier umfasst zwei Scharnierteile, von denen ein erstes Scharnierteil 9 auf dem mindestens einen Bügel 5 und ein zweites Scharnierteil 11 auf dem Mittelteil 3 angeordnet ist.

Das erste Scharnierteil 9 ist hier vorzugsweise als Federscharnier ausgebildet. Bei anderen, nicht dargestellten Ausführungsbeispielen von Brillen sind aber auch andere Scharnierteile, insbesondere einfache Scharnierteile ohne Federmechanismus möglich.

Beide Scharnierteile 9, 11 sind durch Laserschweißen, insbesondere Nahtschweißen, auf dem Mittelteil 3 beziehungsweise dem Bügel 5 befestigt. Bei einem anderen Ausführungsbeispiel ist es möglich, nur eines der Scharnierteile 9, 11 durch Laserschweißen zu befestigen, wobei das andere Scharnierteil 9, 11 in anderer Weise befestigt wird. Jedenfalls gilt das, was im Folgenden bezüglich des Schweißens des Scharnierteils 9 auf ein Brillenelement ausgeführt wird, auch für das Schweißen des Scharnierteils 11 auf ein korrespondierendes Brillenelement.

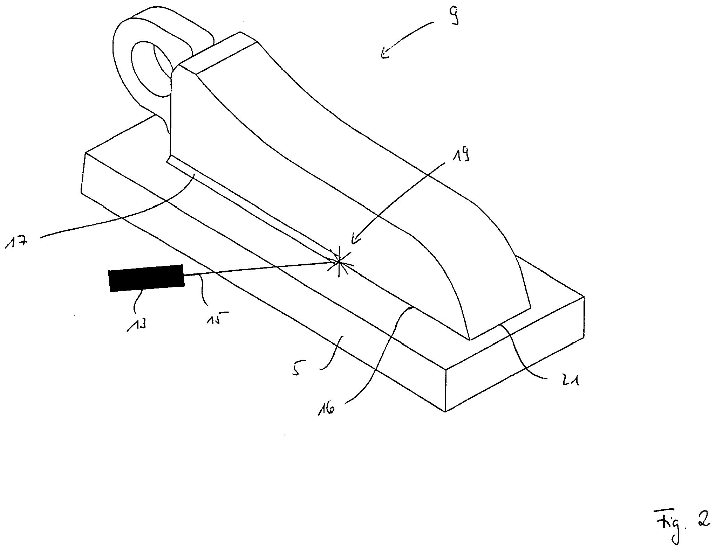

Figur 2 zeigt ein erstes Ausführungsbeispiel eines Scharnierteils 9, das als Federscharnier ausgebildet ist. Es wird mithilfe eines Laserschweißverfahrens auf einem hier als Bügel 5 ausgebildeten Brillenelement befestigt. Dazu ist ein Schweißlaser 13 vorgesehen, der mithilfe eines Laserstrahls 15 zumindest an einer Längskante 16 des Scharnierteils 9 eine durchgehende Schweißnaht 17 erzeugt. Mit einem Stern ist schematisch ein Bereich 19 gekennzeichnet, in dem der Schweißlaser 13 mithilfe des Laserstrahls 15 gerade die Schweißnaht 17 erzeugt. Um die Ausbildung einer Dampfkapillare zu vermeiden, wird der Laser 13 hier nicht mit einer Intensität betrieben, die typischerweise zum Tiefschweißen erforderlich ist. Der Laserstrahl 15 weist stattdessen eine Intensität auf, bei der er im Bereich des sogenannten Wärmeleitungsschweißens arbeitet. Hierbei wird im Bereich der zu verschweißenden Teile keine Dampfkapillare erzeugt. Insbesondere oxidationsempfindliche Materialien werden also nicht verdampft. Die abgeschwächte Intensität des Laserstrahls 15 ermöglicht einen kontinuierlichen, reduzierten Wärmeeintrag entlang der Längserstreckung der zu erzeugenden Naht unter Vermeidung großer Temperaturgradienten, so dass eine Versprödung der Schweißnaht 17 durch Oxidbildung vermieden wird.

Der Laser 13 ist bevorzugt als Dauerstrichlaser ausgebildet, insbesondere als Diodenlaser. Dies ermöglicht einen kontinuierlichen, relativ geringen Wärmeeintrag, so dass die Ausbildung einer Dampfkapillare und letztlich die Bildung von Oxiden wirksam vermieden werden kann. Insbesondere erfolgt bei einem Dauerstrichlaser der Wärmeeintrag im Vergleich zum gepulsten Laser nicht quasi instantan, wodurch ein schlagartiges Verdampfen von Material vermieden wird. Über die Relativgeschwindigkeit des Laserstrahls 15 relativ zu den zu verschweißenden Teilen kann der Wärmeeintrag an jeder einzelnen Stelle der Schweißnaht 17 variiert werden, so dass er insbesondere an verschiedene zu schweißende Materialien angepasst werden kann. Bevorzugt wird die Relativgeschwindigkeit entlang der Erstreckung der erzeugenden Naht im Wesentlichen konstant gehalten, so dass ein kontinuierlicher und konstanter Wärmeeintrag gewährleistet ist. Der Wert der im Wesentlichen konstanten Verfahrgeschwindigkeit bestimmt dann den Wärmeeintrag pro Längeneinheit der Naht.

Die Schweißnaht 17 ist als durchgehende Schweißnaht ausgebildet. Dies bedeutet, dass sie nicht durch insbesondere überlappendes Aneinanderreihen einzelner Schweißbereiche, beispielsweise Schweißpunkte, erzeugt ist, sondern als kontinuierliche Naht ausgebildet ist. Sie kann sich entlang der gesamten Längskante 16 des Scharnierteils 9 erstrecken. Es können aber auch mehrere Schweißnähte 17 entlang der Längskante vorgesehen sein, wobei vorzugsweise jede einzelne Schweißnaht als durchgehende Schweißnaht ausgebildet ist. Bei dem in Figur 2 gezeigten Ausführungsbeispiel wird die Schweißnaht 17 an der dem Betrachter zugewandten Längskante 16 des Scharnierteils 9 erzeugt. Bei einem weiteren bevorzugten Ausführungsbeispiel wird auch an der gegenüberliegenden, dem Betrachter abgewandten Längskante des Scharnierteils 9 eine Schweißnaht erzeugt. Auch hier kann bevorzugt eine einzige durchgehende Schweißnaht erzeugt werden, die die gesamte Längserstreckung der Längskante umfasst. Es können aber sehr wohl auch einzelne Schweißnähte erzeugt werden, die bevorzugt jede für sich genommen durchgehend ausgebildet sind. Bei wieder einem anderen Ausführungsbeispiel ist es auch möglich, eine einzige Schweißnaht an mindestens einer der Längskanten vorzusehen, wobei diese Schweißnaht nicht die gesamte Erstreckung der Längskante umfasst.

Bei einem bevorzugten Ausführungsbeispiel kann auch an einer hinteren Kante 21 des Scharnierteils 9, die die beiden Längskanten miteinander verbindet, eine Schweißnaht erzeugt werden.

Bevorzugt kann der Laser 13 als gepulster Laser ausgebildet sein. In diesem Fall wird die durchgehende Schweißnaht 17 entlang ihrer Erstreckung innerhalb der Zeitdauer eines einzigen Laserpulses erzeugt. Die Pulsdauer des gepulsten Lasers 13 ist im Vergleich zu herkömmlichen Pulsdauern gepulster Laser gedehnt. Sie umfasst bei einem bevorzugten Ausführungsbeispiel ungefähr 50 ms, wobei in dieser Zeit bevorzugt eine Schweißnaht 17 mit einer Länge von circa 10 mm erzeugt werden kann. Abhängig von der Pulsenergie und den zu verschweißenden Materialien können diese Werte in anderen Ausführungsbeispielen variiert werden. Insbesondere ist es möglich, die Pulsdauer und die Verfahrgeschwindigkeit des Laserstrahls 15 zu variieren. Es ist auch möglich, die Pulsenergie zu variieren, insbesondere auf die zu verschweißenden Materialien und die zu erzeugende Nahtlänge abzustimmen. Letztlich können alle Parameter, also die Pulsenergie, Pulsdauer, damit auch Pulsleistung, der Durchmesser des bestrahlten Bereichs und damit insbesondere die Intensität der Bestrahlung, sowie die Verfahrgeschwindigkeit auf die gewünschten Bedingungen angepasst und optimiert werden.

Bei einem gepulsten Laser wird pro Laserpuls eine bestimmte Energiemenge in Form von Licht freigesetzt. Die Laserleistung während eines Pulses ist abhängig von der Pulsdauer. Durch eine Verlängerung der Pulsdauer wird die Laserleistung reduziert, wodurch sich auch der Wärmeeintrag in die zu verschweißenden Teile verringert. Bei einer üblichen Pulsdauer würde der Laser 13 eine Dampfkapillare erzeugen, so dass sich Oxide oxidationsempfindlicher Materialien bilden könnten, was zu einer Versprödung der Schweißnaht führt. Durch die Verlängerung der Pulsdauer wird die Laserleistung so weit reduziert, dass der Laser 13 im Bereich des Wärmeleitungsschweißen arbeitet, so dass keine Dampfkapillare entstehen kann, wodurch eine Versprödung der Naht unter Oxidbildung vermieden wird.

Hierdurch ist es möglich, Materialien zu schweißen, die insbesondere Zink umfassen. Insbesondere Neusilber (z.B. Cu-Ni₁₈Zn₂₀) kann mit dem erfindungsgemäßen Verfahren geschweißt werden. Bei bekannten Verfahren bildet sich in der entstehenden Dampfkapillare Zinkoxid, was zu einer Versprödung der Schweißnaht führt.

Es kann also zumindest eines der Scharnierteile Neusilber umfassen, vorzugsweise aus Neusilber bestehen. Es ist auch möglich, dass der mindestens eine Bügel 5 und/oder das Mittelteil 3 der Brille 1 Neusilber umfasst, vorzugsweise aus Neusilber besteht. Weiterhin kann zumindest eines der Scharnierteile und/oder eines der Brillenelemente Stahl, INOX oder Titan umfassen, vorzugsweise aus Stahl, INOX oder Titan bestehen. Insbesondere ist es möglich, verschiedene Materialien miteinander zu verschweißen. Beispielsweise kann ein Scharnierteil aus Neusilber auf einen Bügel aus Stahl geschweißt werden. Es kann aber auch ein Scharnierteil aus Stahl auf ein Mittelteil oder einen Bügel aus Neusilber geschweißt werden. Auch eine Schweißverbindung von Neusilber auf Neusilber ist möglich. Andere Kombinationen von Materialien für Brillenelemente und Scharnierteile sind ebenfalls möglich.

Die bei dem Schweißverfahren entstehende, durchgehende Naht ist insbesondere daran zu erkennen, dass sie keine so genannte Schweißraupe aufweist. Eine Schweißraupe entsteht dadurch, dass zur Erzeugung der Schweißnaht mehrere nebeneinander überlappend angeordnete Schweißpunkte vorgesehen werden. Vorliegend wird die Schweißnaht 17 jedoch bevorzugt durch einen Dauerstrichlaser, besonders bevorzugt innerhalb der Zeitdauer eines einzigen Laserpulses entlang ihrer Erstreckung durch einen gepulsten Laser erzeugt. Es werden also keine diskreten Schweißpunkte nebeneinander überlappend angeordnet, sondern die Schweißnaht 17 ist kontinuierlich und durchgehend ausgebildet.

Zum Schweißen kann bei einem bevorzugten Ausführungsbeispiel ein Zusatzwerkstoff zum Einsatz kommen. Dieser kann bevorzugt ein Material umfassen, welches auch das zu verschweißende Scharnierteil und/oder das Brillenelement umfasst, auf welches das Scharnierteil geschweißt wird. Es kann aber auch ein von den Materialien der zu verschweißenden Teile verschiedenes Material verwendet werden. Dabei wird bevorzugt ein Zusatzwerkstoff mit einem Schmelzpunkt eingesetzt, der geringer ist als bei den Materialien, welche die zu verschweißenden Teile umfassen. Dies ermöglicht eine weitere Reduzierung der Laserleistung und damit des Wärmeeintrags, so dass die Gefahr einer Oxidbildung und damit Versprödung der Schweißnaht weiter abnimmt.

Nach dem Schweißvorgang ist es möglich, die Schweißnaht 17 entweder mit dem Schweißlaser 13 oder einem weiteren Laser nachzubearbeiten, um vorzugsweise das Erscheinungsbild der Schweißnaht 17 zu verbessern. Insbesondere soll das Erscheinungsbild in ästhetischer Hinsicht verbessert werden. Durch einen Laserstrahl, der eine geringere Intensität aufweist als der zum Schweißen eingesetzte Laserstrahl 15 kann die Naht beispielsweise geglättet werden. Es können auch die Ränder der Naht geglättet werden, so dass der Übergang von der Schweißnaht 17 in die zu schweißenden Teile, im Ausführungsbeispiel von Figur 2 also das Scharnierteil 9 und der Bügel 5, kontinuierlich und ohne sichtbare Stufe oder Kante ausgebildet ist.

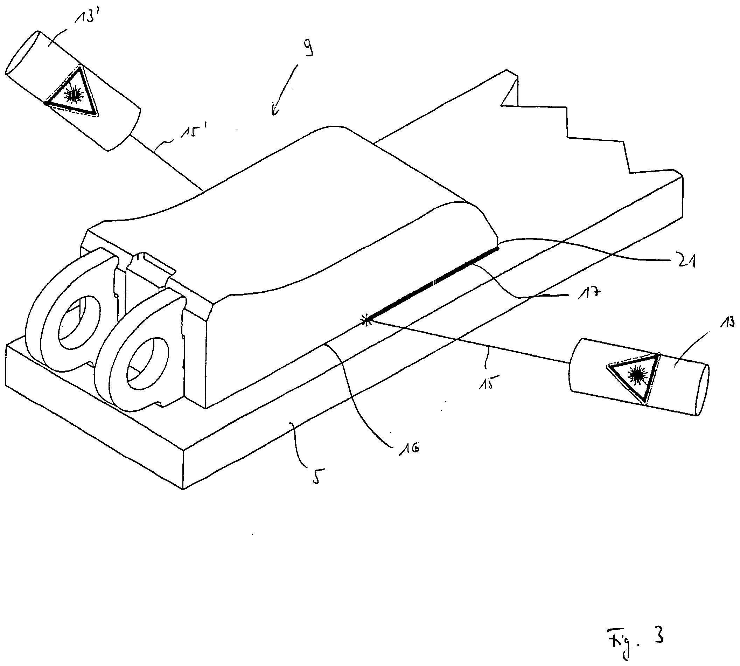

Figur 3 zeigt ein zweites Ausführungsbeispiel eines als Federscharnier ausgebildeten ersten Scharnierteils 9, dass auf einem hier als Bügel 5 ausgebildeten Brillenelement mithilfe eines Laserschweißverfahrens festgeschweißt wird. Gleiche und funktionsgleiche Elemente sind mit gleichen Bezugszeichen versehen, so dass insofern auf die vorangegangene Beschreibung verwiesen wird. Selbstverständlich ist es bei einem anderen Ausführungsbeispiel auch möglich, das erste Scharnierteil 9, das hier beispielhaft als Federscharnier ausgebildet ist, auf das Mittelteil 3 einer Brille aufzuschweißen, wobei dann das zweite Scharnierteil 11 auf ein als Bügel 5 ausgebildetes Brillenelement aufgeschweißt wird.

In Figur 3 ist zu sehen, dass an jeder der beiden Längskanten des Scharnierteils 9 jeweils eine Schweißnaht von einem Schweißlaser 13 und einem weiteren Schweißlaser 13' mit je einem Laserstrahl 15, 15' erzeugt wird. Besonders bevorzugt werden die hier dem Betrachter zugewandte Schweißnaht 17 und die auf der gegenüberliegenden Seite angeordnete, dem Betrachter abgewandte und hier nicht sichtbare Schweißnaht gleichzeitig erzeugt, so dass an beiden Längskanten des Scharnierteils 9 Schweißnähte in einer Zeit erzeugt werden können, die sonst für eine einzige Schweißnaht aufgewendet wird. Beträgt bei einem gepulsten Laser die Pulsdauer vorzugsweise 50 ms, und wird während dieser Zeit an beiden Längskanten jeweils eine durchgehende Schweißnaht erzeugt, kann das Scharnierteil 9 innerhalb von 50 ms mithilfe der Laser 13,13' auf den Bügel 5 geschweißt werden. Dadurch wird die Zeit zum Befestigen des Scharnierteils 9 auf dem Bügel 5 erheblich reduziert.

Bevorzugt kann nach oder gleichzeitig mit den Schweißnähten an den Längskanten des Scharnierteils 9 auch eine Schweißnaht an der diese verbindenden Kante 21 vorgesehen werden. Bei einem Ausführungsbeispiel, bei dem die Schweißnaht 17 an der Kante 16 und die gegenüberliegende Schweißnaht die gesamte Längserstreckung der Längskanten umfassen, und bei dem zusätzlich eine Schweißnaht an der Kante 21 vorgesehen ist, die ebenfalls deren gesamte Längserstreckung umfasst, ist das Scharnierteil 9 auf drei seiner Seiten geschlossen auf den Bügel 5 aufgebracht. Es sind hier also keine Spalte oder Lücken mehr vorhanden, so dass keine Gase, Flüssigkeiten und/oder Schmutz eindringen können. Insbesondere können keine korrosiven Substanzen ins Innere des Scharnierteils 9 eindringen und dessen Funktion beeinträchtigen, was insbesondere dann nachteilig wäre, wenn das Scharnierteil 9 als Federscharnier ausgebildet ist. Das Scharnierteil 9 kann also gas- und/oder flüssigkeitsdicht auf einen Bügel 5 aufgebracht werden, wenn an drei seiner Kanten Schweißnähte erzeugt werden, die die gesamte Erstreckung der Kanten umfassen.

Um die Schweißnaht an einer Kante 21 auszubilden, kann ein dritter, hier nicht dargestellter Laser vorgesehen sein. Es kann aber auch einer der Laserstrahlen 15, 15' durch ein Prisma, einen halbdurchlässigen Spiegel oder eine andere geeignete Optik geteilt werden, wobei er dann zugleich eine Schweißnaht an einer der Längskanten und an der Kante 21 erzeugen kann. In wieder einem anderen Ausführungsbeispiel ist es möglich, die Schweißnaht an der Kante 21 anzuordnen, nachdem die Schweißnähte an der Längskante des Scharnierteils 9 erzeugt wurden.

Zur Erzeugung der Schweißnähte können bei einem Ausführungsbeispiel die Laser und/oder Laserstrahlen entlang der Erstreckung der zu erzeugenden Nähte bewegt werden, während die zu verschweißenden Teile ruhen. Umgekehrt ist es bei einem anderen Ausführungsbeispiel möglich, die zu verschweißenden Teile entlang der Erstreckung der zu erzeugenden Nähte zu bewegen, während die Laser beziehungsweise Laserstrahlen ortsfest bleiben. Bei wieder einem anderen Ausführungsbeispiel können sowohl die Laser beziehungsweise Laserstrahlen als auch die zu verschweißenden Teile in Bewegung sein, wobei eine Relativbewegung zwischen den Lasern beziehungsweise Laserstrahlen und den zu verschweißenden Teilen entlang der Erstreckung der Schweißnähte gewährleistet ist.

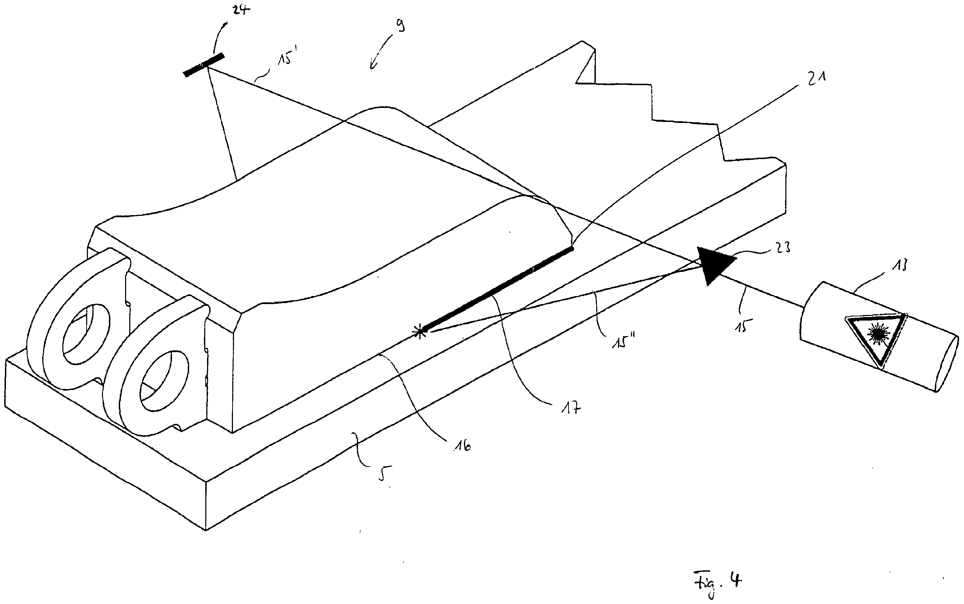

Figur 4 zeigt ein weiteres Ausführungsbeispiel eines als Federscharnier ausgebildeten Scharnierteils 9, welches auf ein Brillenelement, das hier als Bügel 5 ausgebildet ist, geschweißt wird. Gleiche und funktionsgleiche Elemente sind mit gleichen Bezugszeichen versehen, so dass insofern auf die vorangegangene Beschreibung verwiesen wird. Es ist hier ein einziger Schweißlaser 13 vorgesehen, dessen Laserstrahl 15 durch ein Prisma 23 in einen ersten Teilstrahl 15' und einen zweiten Teilstrahl 15" aufgeteilt wird. Bei einem bevorzugten Ausführungsbeispiel kann anstelle eines Prisma 23 auch ein System von Prismen, ein halbdurchlässiger Spiegel, ein System von halbdurchlässigen Spiegeln oder eine andere geeignete Optik vorgesehen sein. Bei dem dargestellten Ausführungsbeispiel wird der erste Laserstrahls 15' über einen Spiegel 24 auf die dem Betrachter abgewandte Längskante des Scharnierteils 9 gelenkt, um hier eine nicht dargestellte Schweißnaht zu erzeugen. Bei einem anderen Ausführungsbeispiel ist statt eines einzigen Spiegels 24 ein Spiegelsystem oder eine andere geeignete Optik einsetzbar. Der zweite Teilstrahl 15" wird bei dem dargestellten Ausführungsbeispiel direkt von dem Prisma auf die dem Betrachter zugewandte Längskante 16 des Scharnierteils 9 gelenkt, um dort die Schweißnaht 17 zu erzeugen. Bei einem anderen Ausführungsbeispiel ist es möglich, dass der Teilstrahl 15" über einen Spiegel, ein Spiegelsystem oder eine andere geeignete Optik auf die Längskante des Scharnierteils 9 gelenkt wird. Bevorzugt werden der Spiegel 24 und das Prisma 23 oder die entsprechend vorgesehenen Optiken verschwenkt, um entlang der Erstreckung der Längskanten Schweißnähte zu erzeugen. Bei einem anderen Ausführungsbeispiel können die Optiken ruhen, während die zu verschweißenden Teile entsprechend bewegt werden. Wesentlich ist eine Relativbewegung dieser Elemente, die eine Erzeugung der Schweißnähte gewährleistet. Auf diese Weise ist es möglich, innerhalb der Dauer eines einzigen Laserpulses des vorzugsweise gepulsten Lasers 13 an beiden Längskanten des Scharnierteils 9 gleichzeitig Schweißnähte zu erzeugen. Das Scharnierteil 9 kann also auch bei diesem Ausführungsbeispiel innerhalb der Pulsdauer eines einzigen Laserpulses des Lasers 13 auf das hier als Bügel 5 ausgebildete Brillenelement geschweißt werden, wobei hier kein zweiter Laser nötig ist. Bevorzugt können weitere optische Elemente vorgesehen sein, um einen hier nicht dargestellten dritten Teilstrahl abzuzweigen, der entlang der Kante 21 eine Schweißnaht erzeugt. Auf diese Weise können an drei Kanten des Scharnierteils 9 mithilfe eines einzigen Lasers 13 Schweißnähte während eines einzigen Laserpulses erzeugt werden. Das Scharnierteil 9 kann dabei bevorzugt gas- und/oder flüssigkeitsdicht auf dem Bügel 5 befestigt werden, wenn die erzeugten Schweißnähte die gesamte Erstreckung der zugeordneten Kanten umfassen.

Bei einem weiteren Ausführungsbeispiel kann auch während eines einzigen Laserpulses durch Relativbewegung eines einzigen Laserstrahls 15 zu den zu verschweißenden Teilen eine durchgehende Schweißnaht erzeugt werden, die sich entlang aller drei Kanten des Scharnierteils 9 oder des Scharnierteils 11 erstreckt.

Insbesondere zeigt sich, dass das Laserschweißverfahren automatisierbar ist. Die Laser oder Laserstrahlen beziehungsweise Laserteilstrahlen können automatisiert relativ zu den Kanten des Scharnierteils 9 und/oder des nicht dargestellten Scharnierteils 11 bewegt werden, um diese automatisiert zu schweißen. Ebenso ist es möglich, das Scharnierteil 9 oder das Scharnierteil 11 automatisiert relativ zu den Lasern oder Laserstrahlen beziehungsweise Laserteilstrahlen zu bewegen. Damit ist eine sehr schnelle und automatische Bearbeitung des Schweißvorgangs möglich.

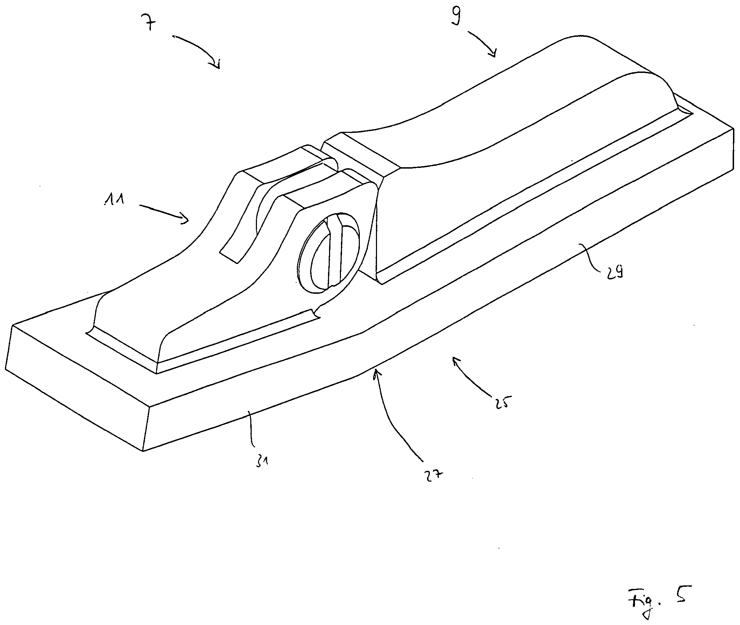

Figur 5 zeigt ein komplettes Scharnier 7, welches ein erstes Scharnierteil 9 und ein zweites Scharnierteil 11 umfasst. Das Scharnierteil 9 entspricht dabei dem in Figur 2 dargestellten Ausführungsbeispiel und ist als Federscharnier ausgebildet. Gleiche und funktionsgleiche Elemente sind mit gleichen Bezugszeichen versehen, so dass insofern auf die vorangegangene Beschreibung verwiesen wird. Beide Scharnierteile 9, 11 sind hier gemeinsam auf einen Bügelrohling 25 aufgeschweißt, der im Bereich einer Biegezone 27 vorgebogen ist. Bevorzugt wird zunächst der Bügelrohling 25 vorgebogen, bevor das Scharnier 7 auf ihm befestigt wird. Nachdem das Scharnier 7 auf den Bügelrohling 25 geschweißt ist, wird dieser vorzugsweise mittels einer Säge im Bereich der Biegezone 27 aufgetrennt, so dass ein Bügelteil 29 und ein Blendenteil 31 gebildet wird. Das Bügelteil 29 entspricht im Wesentlichen dem Bügel 5 der vorangegangenen Ausführungsbeispiele. Das Blendenteil 31 kann an einem Mittelteil 3 einer Brille 1 angeordnet werden. Bei dem dargestellten Ausführungsbeispiel ist das Scharnierteil 9 auf dem Bügelteil 29 angeordnet, wobei das Scharnierteil 11 auf dem Blendenteil 31 angeordnet ist. Bei einem anderen Ausführungsbeispiel ist es auch möglich, dass das Scharnier 7 umgekehrt auf dem Bügelrohling 25 befestigt ist, so dass das Scharnierteil 9 auf dem Blendenteil 31 und das Scharnierteil 11 auf dem Bügelteil 29 angeordnet ist.

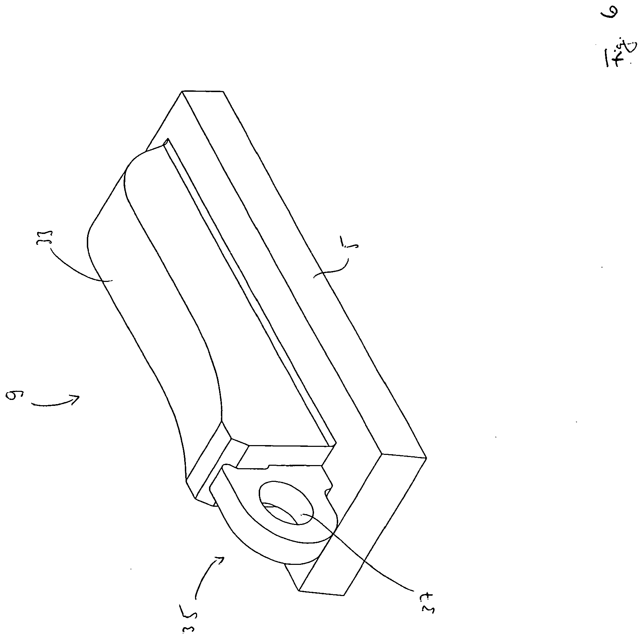

Figur 6 zeigt das Ausführungsbeispiel eines als Federscharnier ausgebildeten Scharnierteils 9 gemäß Figur 2. Gleiche und funktionsgleiche Elemente sind mit gleichen Bezugszeichen versehen, so dass insofern auf die vorangegangene Beschreibung verwiesen wird. Das Scharnierteil 9 ist hier auf einem als Bügel 5 ausgebildeten Brillenelement aufgeschweißt. Bei einem anderen Ausführungsbeispiel ist es auch möglich, dass das Scharnierteil 9 auf einem als Mittelteil 3 einer Brille 1 ausgebildeten Brillenelement aufgeschweißt ist. Wie im Folgenden erläutert wird, ist das hier dargestellte Federscharnier beziehungsweise Scharnierteil 9 besonders schmal und insbesondere dünnwandig ausgebildet, weshalb die Vorteile des erfindungsgemäßen Laserschweißverfahrens in Zusammenhang mit diesem Ausführungsbeispiel eines Federscharniers besonders deutlich zur Geltung kommen. Aus diesem Grund wird dieses Ausführungsbeispiel näher beschrieben.

Das Scharnierteil 9 umfasst ein Gehäuse 33 und ein in diesem in dessen Längsrichtung verschieblich gelagertes Scharnierelement 35, von dem hier lediglich ein Scharnierauge 37 dargestellt ist. Das Scharnierauge 37 dient zur Verbindung des Scharnierteils 9 mit dem hier nicht dargestellten Scharnierteil 11.

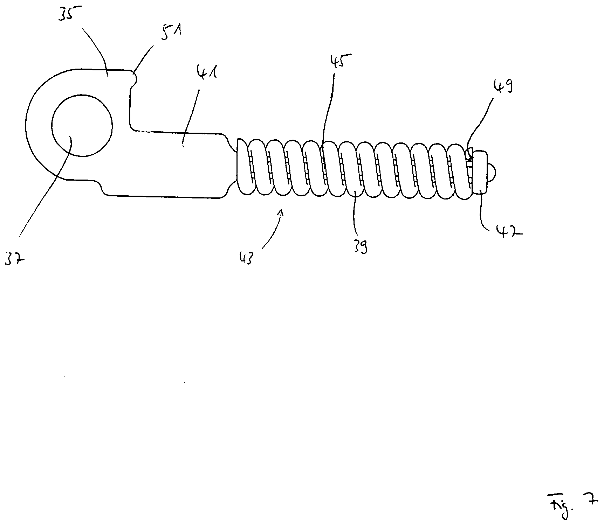

Figur 7 zeigt eine vormontierte Baugruppe des Scharnierteils 9 aus Figur 6. Gleiche und funktionsgleiche Elemente sind mit gleichen Bezugszeichen versehen, so dass insoweit auf die vorangegangene Beschreibung verwiesen wird. Die Baugruppe umfasst das Scharnierelement 35 sowie ein Federelement 39. Das Scharnierelement 35 umfasst einen sich an das Scharnierauge 37 anschließenden Führungsabschnitt 41, der in ein Aufnahmeteil 43 für das Federelement 39 übergeht.

Bei dem hier dargestellten Ausführungsbeispiel ist das Federelement 39 als Schraubenfeder ausgebildet, die von einem von dem Führungsabschnitt 41 ausgehenden Stift 45 durchdrungen wird. Der Stift 45 dient hier als Aufnahmeteil 43 für das Federelement 39. Das letzte, rechte Ende des Stift 45 ist vorzugsweise so verformt, vorzugsweise breitgequetscht oder in Längsrichtung des Stift 45 gestaucht, dass ein Endabschnitt 47 des Stift 45 - in radialer Richtung gesehen - vorspringt, so dass das Federelement 39 nicht aus dem Aufnahmebereich 43 herausrutschen kann. Durch diese Verankerung ist es möglich, dass das als Schraubenfeder ausgebildete Federelement 39 von dem Endabschnitt 47 sicher auf dem Stift 45 gehalten wird. An dem Endabschnitt 47 ist eine Anlagefläche 49 für das Federelement 39 vorgesehen.

Eine Befestigung des Federelements 39 auf dem Stift 45 ist auch auf andere Weise möglich. Bei einem Ausführungsbeispiel kann ein Ring vorgesehen sein, der auf den Stift 45 von rechts aufgeschoben ist. Er kann durch einen vorzugsweise breitgequetschten oder anderweitig verformten Endbereich auf dem Stift 45 gehalten werden. Der Ring kann aber auch beispielsweise nach innen gerichtete Vorsprünge aufweisen, mit denen er sich in einer äußeren Umfangsfläche des Stifts 45 festkrallt. Bei einem anderen Ausführungsbeispiel kann der Ring auf den Stift 45 aufgeschrumpft, aufgepresst, aufgeschweißt, aufgelötet oder aufgeklebt werden. Bevorzugt wird jedoch, wenn das Federelement 39 an einer Anlagefläche 49 anliegt und von dieser auf dem Stift 45 gehalten wird, die durch einen verformten, in radialer Richtung vorspringenden Endabschnitt 47 gebildet wird. Auf ein zusätzliches Befestigungselement, beispielsweise einen Ring, kann dann verzichtet werden, was die Montage der Baugruppe aus Scharnierelement 35 und Federelement 39 deutlich vereinfacht.

Bei wieder einem anderen Ausführungsbeispiel kann das Aufnahmeteil 43 bevorzugt auch als vertiefter Bereich in einem einstückigen Scharnierelement 35 ausgebildet sein. Die Anlagefläche 49 ist auch in diesem Fall einstückig mit dem Rest des Scharnierelements 35 ausgebildet. Das Federelement 39 wird unter Vorspannung in den vertieften Bereich eingesetzt und ist dort sicher gehalten.

Bei wieder einem anderen Ausführungsbeispiel kann das Federelement 39 bevorzugt auch als Mäanderfeder ausgebildet sein, so dass es insbesondere möglich ist, das Scharnierauge 37, den Führungsabschnitt 41 und das Federelement 39 einstückig auszubilden.

Im Bereich des Scharnierauge 37 ist an dem Scharnierelement 35 eine Nase 51 ausgebildet, die - in Längsrichtung des Scharnierelements 35 gesehen - in Richtung auf das Federelement 39 vorspringt. Sie dient der zusätzlichen Sicherung des Scharnierelements 35 nach dessen Einbringen in das Gehäuse 33.

Wie aus Figur 7 ersichtlich ist, sind das Scharnierelement 35 und das Federelement 39 bevorzugt als vormontierbare Baugruppe ausgebildet. Das Federelement 39 ist - vorzugsweise durch den verformten, radial vorspringenden Endabschnitt 47 - verliersicher auf dem Scharnierelement 35 gehalten, so dass beide Elemente gemeinsam gehandhabt und insbesondere als vormontierte Baugruppe in das Gehäuse 33 eingebracht werden können.

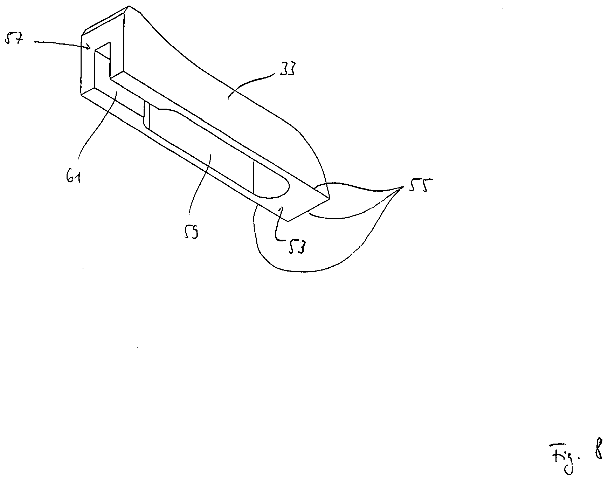

Figur 8 zeigt eine Ansicht des Gehäuses 33, bei der eine untere Fläche 53 sichtbar ist. Gleiche und funktionsgleiche Elemente sind mit gleichen Bezugszeichen versehen, so dass insoweit auf die vorangegangene Beschreibung verwiesen wird. Die untere Fläche 53 wird zum Befestigen des Gehäuse 33 auf ein beispielsweise als Bügel 5 ausgebildetes Brillenelement aufgesetzt, und es wird vorzugsweise jeweils eine durchgehende Schweißnaht 17 entlang der beiden Längskanten des Gehäuses 33 erzeugt. Besonders bevorzugt wird mindestens eine durchgehende Schweißnaht im Bereich einer umlaufenden Kante 55 vorgesehen, wobei vorzugsweise die Stirnseite 57 freigelassen wird.

Das Gehäuse 33 ist mit einer Ausnehmung 59 versehen, die sich - in Figur 8 - nach links oben in eine Durchführung 61 fortsetzt. Letztere durchbricht die Stirnseite 57 des Gehäuses 33. Die in Querrichtung des Gehäuses 33 gemessene Breite der Ausnehmung 59 ist größer als die der Durchführung 61. Mit dem Begriff Querrichtung ist hier die Richtung angesprochen, die senkrecht auf der Längserstreckung des Gehäuses 33 steht.

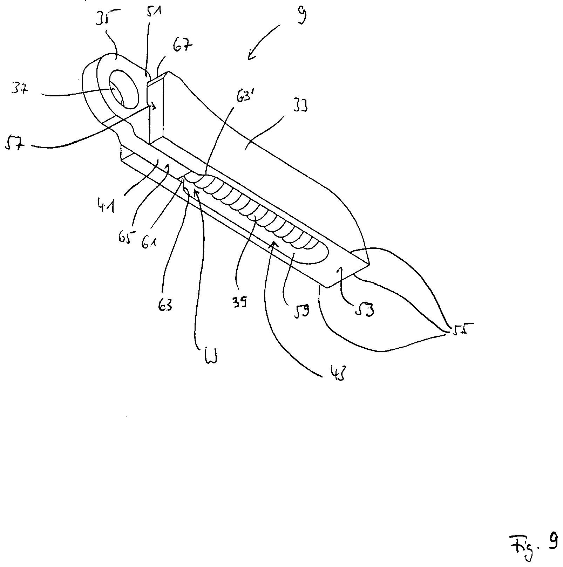

Figur 9 zeigt die das Scharnierelement 35 und das Federelement 39 umfassende Baugruppe, die in das Gehäuse 33 eingesetzt ist. Gleiche und funktionsgleiche Elemente sind mit gleichen Bezugszeichen versehen, so dass insoweit auf die vorangegangene Beschreibung verwiesen wird. Das Scharnierteil 9 ist in Figur 9 als vormontierte Einheit beziehungsweise Baugruppe vollständig zusammengesetzt. Die Breite des Federelements 39 ist vorzugsweise an die Breite der Ausnehmung 59 angepasst. Dadurch ergibt sich im Übergangsbereich zwischen der Ausnehmung 59 und der Durchführung 61 ein Widerlager W, dass zwei Anlagebereiche 63, 63' für das Federelement 39 umfasst. Die - in Längsrichtung des Gehäuses 33 gemessene - Länge der Ausnehmung 59 einerseits und des Aufnahmeteils 43 beziehungsweise des Federelements 39 andererseits sind so aufeinander abgestimmt, dass das Federelement 39 komprimiert wird, wenn es in die Ausnehmung 59 eingebracht wird. Es schlägt dann auf der einen Seite an den Anlagebereichen 63, 63' und an der anderen Seite an der Anlagefläche 49, die hier nicht dargestellt ist, an. Das Federelement 39 ist im eingebauten Zustand also einer Vorspannung unterworfen. Durch diese werden die in das Gehäuse 33 eingebrachten Teile sicher gehalten. Auf ein herkömmliches Verschlussteil kann ohne weiteres verzichtet werden, so dass die Montage des Scharnierteils 9 deutlich vereinfacht wird. Dies führt zu einer Kostenersparnis, die auch dadurch gegeben ist, dass die Anzahl der zur Herstellung des Scharnierteils 9 erforderlichen Teile reduziert ist. Das Scharnierteil 9 kann als vormontierte Baugruppe gehandhabt werden, weil das Scharnierelement 35 und das Federelement 39 durch die von letzterem erzeugte Vorspannung sicher in dem Gehäuse 33 gehalten werden.

Auf ein separates Verschlussteil kann insbesondere deshalb verzichtet werden, weil das Widerlager W unmittelbar durch das Gehäuse 33, nämlich durch einen Wandabschnitt größerer Wandstärke im Übergangsbereich zwischen der Durchführung 61 und der Ausnehmung 59 gebildet wird.

Das Scharnierelement 35 ist im Inneren des Gehäuses 33 in dessen Längsrichtung verschiebbar gelagert. Die Abmessungen des Führungsabschnitt 41 und der Durchführung 61 sind so aufeinander abgestimmt, dass das Scharnierelement 35 im Bereich des Führungsabschnitts 41 sicher in der Durchführung 61 geführt wird. Insbesondere entspricht vorzugsweise die - senkrecht zur Längserstreckung des Gehäuses 33 gemessene - Breite des Führungsabschnitt 41 vorzugsweise der Breite der Durchführung 61, so dass äußere Seitenflächen des Führungsabschnitts 41 hier an inneren Seitenflächen der Durchführung 61 gleiten. Außerdem entspricht bevorzugt die Höhe des Führungsabschnitts 41 der Höhe der Durchführung 61, so dass eine hier nicht dargestellte Oberfläche des Führungsabschnitts 41 an einer ebenfalls nicht dargestellten Grundfläche der Durchführung 61 gleitet. Eine untere Fläche 65 fluchtet vorzugsweise mit der unteren Fläche 53 des Gehäuses 33, so dass sie auf dem hier als Bügel 5 ausgebildeten, nicht dargestellten Brillenelement gleitet, wenn das Scharnierteil 9 auf diesem befestigt ist. Insgesamt wird das Scharnierelement 35 also im Bereich des Führungsabschnitts 41 bevorzugt von allen Seiten sicher geführt, so dass es ausschließlich in axialer Richtung verlagerbar und insbesondere gegen Verdrehung um seine Längsachse gesichert ist.

Bevorzugt ist auch die Höhe des Federelements 39 an die Höhe der Ausnehmung 59 angepasst. Dasselbe gilt vorzugsweise für einen die Anlagefläche 49 aufweisenden Endabschnitt 47, dessen Form und/oder Durchmesser bevorzugt so gewählt werden, dass er einerseits an dem Brillenelement und andererseits zumindest an einer Seitenfläche oder Oberfläche der Ausnehmung 59 gleitet. Bevorzugt werden das Federelement 39 und der Endabschnitt 47 an allen die Ausnehmung 59 begrenzenden Flächen sicher geführt. Dies wiederum gewährleistet eine optimale Führung des Scharnierelements 35 im Inneren des Gehäuses 33.

Figur 9 lässt noch erkennen, dass die Stirnseite 57 des Gehäuses 33 im Bereich einer Fase 67 etwas zurückspringt. Die Nase 51 des Scharnierelements 35 und die Fase 67 des Gehäuses 33 sind vorzugsweise komplementär zueinander ausgebildet, so dass eine zusätzliche Sicherung das Scharnierelements 35 gegeben ist, wenn die Nase 51 an der Fase 67 anschlägt. Das Scharnierelement 35 wird so nicht nur durch Reibungskräfte sondern auch durch Formschluss im Gehäuse 33 gehalten. Dadurch, dass die Nase 51 aufgrund der Vorspannung des Federelements 39 gegen die Fase 67 des Gehäuses 33 gepresst wird, entsteht eine Dichtwirkung, so dass das Innere des Gehäuses 33, also die Durchführung 61 und die Ausnehmung 59, vor Verschmutzungen geschützt wird. Insbesondere schließt vorzugsweise der Führungsbereich 41 mit der Durchführung 61 so dicht ab, dass von der Stirnseite 57 her kein Schmutz und bevorzugt auch keine Flüssigkeiten in das Gehäuse 33 eindringen können.

Insgesamt zeigt sich, dass das Federelement 35 zusammen mit dem Scharnierelement 35 so als Baugruppe in die Ausnehmung 59 eingesetzt ist, dass das Federelement 39 das Scharnierelement 35 mit einer Kraft beaufschlagt, die zu einem Reib- und/oder Formschluss zwischen dem Scharnierelement 35 und dem Gehäuse 33 führt.

Es zeigt sich auch, dass das Innere des Gehäuses 33 gas- und/oder flüssigkeitsdicht abschließbar ist, wenn eine umlaufende Schweißnaht entlang der umlaufenden Kante 55 erzeugt wird. Eine Verlust der Funktion des als Federscharnier ausgebildeten Scharnierteils 9 durch Korrosion und/oder Verschmutzung kann dann sicher vermieden werden.

Zur Durchführung des Laserschweißverfahrens sind nur geringe mechanische Anpresskräfte nötig, die gerade ausreichen, das Gehäuse 33 auf dem Brillenelement sicher zu halten. Auch die thermische Belastung des Scharnierteils 9 ist sehr gering, weil bei dem hier vorgeschlagenen Laserschweißverfahren nur sehr lokal die Umgebung des Bereichs 19, in dem gerade die Schweißnaht 17 erzeugt wird, erhitzt wird. Dabei ist der Wärmeeintrag auf ein Minimum reduziert und deutlich geringer als beispielsweise beim Tiefschweißen. Aufgrund der geringen thermischen Belastung ist es möglich, das Scharnierteil 9 als vormontierte Baugruppe auf einem beispielsweise als Bügel 5 ausgebildeten Brillenelement zu befestigen. Die geringe mechanische und thermische Belastung ermöglicht dünne Wandstärken im Bereich des Gehäuses 33, so dass das Scharnierteil 9 schmal und dünnwandig ausfallen kann. Auch ist es möglich, zusammengebaute, also vormontierbare Federscharniere mittels dieses Laserschweißverfahrens zu befestigen, ohne dass empfindliche Teile, beispielsweise Federn, durch einen zu hohen Wärmeeintrag beschädigt werden, wie er beim Elektroschweißen, Löten und beim Tiefschweißen gegeben ist. Dadurch, dass das Gehäuse 33 selbst ein als Verschluss wirkendes Widerlager W aufweist, kann es außerdem schmaler und auch kürzer, insgesamt also kompakter ausfallen, weil kein zusätzliches, separates Verschlussteil nötig ist.

Das Scharnierteil 9 umfasst so nur noch drei Bauteile, nämlich das Scharnierelement 35, das Federelement 39 und das Gehäuse 33. Das Scharnierelement 35 und des Federelement 39 können als vormontierte Baugruppe in das Gehäuse 33 eingesetzt werden. Durch die im Bereich des Federelements 39 herrschende Vorspannkraft wird diese Baugruppe sicher im Gehäuse 33 gehalten, so dass eine vormontierte Einheit beziehungsweise Baugruppe aus Scharnierelement 35, Federelement 39 und Gehäuse 33 gebildet wird. Auch diese kann als Einheit gehandhabt und auf ein bevorzugt als Bügel 5 ausgebildetes Brillenelement aufgesetzt und dort befestigt werden. Insgesamt ergibt sich also eine äußerst einfache Handhabung, so dass die Montage des Scharnierteils 9 auf einem Brillenelement hochgradig automatisiert werden kann, wodurch eine besonders kostengünstige Fertigung möglich ist. Auch das Laserschweißverfahren trägt wesentlich zur einfacheren Automatisierung des Prozesses bei, weil hier vorzugsweise Schweißroboter eingesetzt werden können.

Die Ausnehmung 59 sowie die Durchführung 61 werden vorzugsweise entweder bei der Herstellung des Gehäuses 33 eingeformt, beispielsweise bei einem Gieß- oder Sintervorgang beziehungsweise einem Metal-Injection-Moulding-Prozess (MIM-Prozess), oder sie werden vorzugsweise durch spanabhebende Bearbeitung eingebracht. Breite und Tiefe der Ausnehmung 59 beziehungsweise der Durchführung 61 werden an die einzubringenden Elemente angepasst.

Wesentlich ist, dass das Federelement 39 das Scharnierelement 35 mit einer Druckkraft beaufschlagt, durch die das Scharnierelement 35 in das Innere des Gehäuses 33 hineingezogen wird, aber zumindest über einen vorgebbaren Weg gegen die Kraft des Federelements 39 aus dem Gehäuse 33 herausziehbar ist. Hierzu ist das Scharnierelement 35 in Längsrichtung des Scharnierteils 9 verschieblich gelagert.

Wie Figur 5 zeigt, ist es auch möglich, die Baugruppe um den Bügelrohling 25 zu erweitern. Nachdem dieser im Bereich der Biegezone 27 in ein Bügelteil 29 und ein Blendenteil 31 aufgeteilt ist, kann das Blendenteil 31 an dem Mittelteil 3 einer Brille 1 befestigt werden. Dies vereinfacht die Montage weiter, weil das gesamte Scharnier 7 einfach auf einem Bügelrohling 25 befestigt werden kann, während es komplizierter ist, zunächst das Scharnierteil 9 auf einem Bügel 5 zu befestigen, wobei erst danach das Scharnierteil 11 auf einem Mittelteil 3 befestigt wird. Auch bei umgekehrter Anordnung der Scharnierteile 9, 11 ist die Montage einfacher, als wenn diese unabhängig voneinander auf den verschiedenen Brillenelementen angeordnet werden müssten.

Anhand von Figur 9 zeigt sich noch, dass zumindest das erste, auf dem mindestens einen Bügel 5 befestigte Scharnierteil 9 bevorzugt einen offenen Boden aufweist. Dies reduziert dessen Bauhöhe, so dass diese kleiner ausfallen kann, als wenn ein geschlossener Boden im Bereich der Fläche 53 vorgesehen sein müsste. Auf einen Boden kann hier verzichtet werden, weil mithilfe des Laserschweißverfahrens eine gas- und/oder flüssigkeitsdichte Verbindung des Scharnierteils 9 mit dem darunter angeordneten Brillenelement möglich ist.

Insgesamt zeigt sich, dass die Brille 1 und die erfindungsgemäße Vorrichtung dank des erfindungsgemäßen Verfahrens eine Vielzahl von Materialien, insbesondere auch Neusilber, umfassen können, die bisher im Stand der Technik zumindest dem Laserschweißen nicht zugänglich waren. Die Materialien können auch nahezu beliebig miteinander kombiniert werden. Das erfindungsgemäße Laserschweißverfahren vermeidet durch einen reduzierten, kontinuierlichen Wärmeeintrag die Bildung von Dämpfen insbesondere oxidationsempfindlicher Materialien, vor allem Metalle, so dass die entstehende Schweißnaht nicht durch Oxide, insbesondere Metalloxide wie Zinkoxid versprödet wird oder aufplatzt. Dadurch ist eine sicherere und dauerhaftere Verbindung der Scharnierteile auf den zugeordneten Brillenelementen möglich. Darüber hinaus zeigt sich, dass das Verfahren hochgradig automatisiert ablaufen kann. Insbesondere kann die zum Befestigen eines Scharnierteils benötigte Zeit drastisch reduziert werden, wenn ein gepulster Laser mit gedehnter Pulslänge eingesetzt wird, so dass besonders bevorzugt alle Schweißnähte mit einem einzigen Laserpuls während dessen Dauer erzeugt werden können. Aufgrund der geringen thermischen und mechanischen Belastungen, die bei dem Laserschweißverfahren auftreten, ist es möglich, die zu schweißenden Scharniere, insbesondere die als Federscharnier ausgebildeten Scharnierteile besonders schmal, dünnwandig, kurz und mit geringer Höhe, insgesamt also kompakt zu fertigen. Da eine gas- und/oder flüssigkeitsdichte Verbindung erzielt werden kann, ist es zusätzlich möglich, auf einen geschlossenen Boden im Bereich eines Scharnierteils zu verzichten, wodurch sich dessen Bauhöhe weiter reduziert.

Nach allem wird deutlich, dass das hier beschriebene Laserschweißverfahren sich durch einen sehr geringen und gleichmäßigen Wärmeeintrag in die zu verbindenden Bauteile auszeichnet. Indem Dauerstrichlaser, insbesondere Diodenlaser, verwendet werden oder das Impulsverfahren der oben beschriebenen Art eingesetzt wird, ergibt sich ein sehr sauberes Nahtbild.

Es hat sich auch herausgestellt, dass die Einrichtung, die zur Verbindung eines Federscharniers mit einem Brillenteil erforderlich ist, relativ preiswert herstellbar ist. Dabei ist der Aufbau der Einrichtung einfach und daher wenig wartungsintensiv. Wesentlich ist auch, dass eine Einrichtung zur Durchführung des hier beschriebenen Verfahrens kompakter ausfallen kann als dies bei bekannten Anlagen der Fall ist.

Wie beschrieben ist es besonders vorteilhaft, dass vormontierte Federscharniere, die empfindliche Bauteile enthalten, hier verarbeitet werden können, weil der Wärmeeintrag so gering ist, dass auch empfindliche Federn im Gehäuse des Federscharniers nicht beeinträchtigt werden, insbesondere nicht ausgeglüht werden. Auch können sehr kleine Gehäuse mit relativ dünnen Wänden verarbeitet werden, weil auch dünne Materialien bei dem geringen Wärmeeintrag keinen Schaden nehmen. Insbesondere ist es auch möglich, Teile aus Neusilber miteinander zu verbinden, weil die relativ niedrige Temperatur nicht ausreicht, ein Ausgasen der Bestandteile von Neusilber zu bewirken, was regelmäßig zur Versprödung der Verbindungsnaht führt.

## Patentansprüche

1. Vorrichtung, umfassend ein als Bügel (5) oder Mittelteil (3) einer Brille (1) ausgebildetes Brillenelement und ein Scharnierteil (9,11), **dadurch gekennzeichnet, dass** das Scharnierteil (9,11) auf dem Brillenelement angeordnet und durch Laser-Wärmeleitungsschweißen, insbesondere Nahtschweißen, befestigt ist, wobei zumindest an einer Längskante (16) des Scharnierteils (9,11) mindestens eine durchgehende Schweißnaht (17) zu dessen Befestigung ausgebildet ist, die durch Laser-Wärmeleitungsschweißen kontinuierlich entlang ihrer Erstreckung erzeugt ist, wobei die mindestens eine durchgehende Schweißnaht (17) keine Schweißraupe aufweist, und wobei die mindestens eine durchgehende Schweißnaht (17) entlang ihrer Erstreckung mit im Wesentlichen konstanter Leistung und/oder Intensität eines die Schweißnaht (17) erzeugenden Laserstrahls (15) erzeugt ist, wobei
a) das Scharnierteil (9,11) und/oder das Brillenelement Neusilber umfasst, vorzugsweise aus Neusilber besteht, und/oder dass
b) das Scharnierteil (9,11) und/oder das Brillenelement INOX oder Titan umfasst, vorzugsweise aus INOX oder Titan besteht.

2. Vorrichtung nach Anspruch 1, **dadurch gekennzeichnet, dass** die Schweißnaht (17) ein Erscheinungsbild aufweist, das dem einer Lötnaht gleicht.

3. Vorrichtung nach einem der vorhergehenden Ansprüche, **dadurch gekennzeichnet, dass**
a) das Scharnierteil (9,11) einen offenen Boden aufweist, und/oder dass
b) das Scharnierteil (9,11) vormontierbar ist.

4. Vorrichtung nach einem der vorhergehenden Ansprüche, **dadurch gekennzeichnet, dass** das Scharnierteil (9,11) ein Federscharnier ist.

5. Brille mit
- einem Mittelteil (3) und
- mindestens einem Bügel (5), wobei
- der mindestens eine Bügel (5) mit dem Mittelteil (3) über ein Scharnier (7) schwenkbeweglich verbunden ist, und wobei
- das Scharnier (7) zwei Scharnierteile (9,11) umfasst, von denen ein erstes (9) auf dem mindestens einen Bügel (5) und ein zweites (11) auf dem Mittelteil (3) angeordnet ist,
**dadurch gekennzeichnet, dass**
zumindest eines der Scharnierteile (9,11) auf dem Mittelteil (3) oder dem Bügel (5) befestigt ist, wobei das wenigstens eine Scharnierteil (9,11) mit dem Mittelteil (3) oder dem Bügel (5) als Vorrichtung gemäß einem der Ansprüche 1 bis 4 ausgebildet ist.

6. Verfahren zum Befestigen eines Scharnierteils (9,11) auf einem Brillenelement, umfassend die folgenden Schritte:
- Anordnen des Scharnierteils (9,11) auf dem Brillenelement;
- Befestigen des Scharnierteils (9,11) auf dem Brillenelement durch Erzeugen von mindestens einer durchgehenden Schweißnaht (17) zumindest an einer Längskante (16) des Scharnierteils (9,11), wobei
- die Schweißnaht (17) durch Laser-Wärmeleitungsschweißen kontinuierlich entlang ihrer Erstreckung ohne eine Schweißraupe erzeugt wird, wobei
- eine Leistung und/oder Intensität eines die Schweißnaht (17) erzeugenden Laserstrahls (15) entlang einer Erstreckung der zu erzeugenden Schweißnaht (17) im Wesentlichen konstant gehalten wird, wobei
a) als Material für das Scharnierteil (9,11) und/oder das Brillenelement ein Material verwendet wird, welches Neusilber umfasst, vorzugsweise aus Neusilber besteht, und/oder dass
b) als Material für das Scharnierteil (9,11) und/oder das Brillenelement ein Material verwendet wird, welches INOX oder Titan umfasst, vorzugsweise aus INOX oder Titan besteht.

7. Verfahren nach Anspruch 6, **dadurch gekennzeichnet, dass** die Schweißnaht (17) so erzeugt wird, dass sie ein Erscheinungsbild aufweist, das dem einer Lötnaht gleicht.

8. Verfahren nach einem der Ansprüche 6 und 7, **dadurch gekennzeichnet, dass** das Scharnierteil (9,11) vor dem Anordnen auf dem Brillenelement vormontiert wird.

9. Verfahren nach einem der Ansprüche 6 bis 8, **dadurch gekennzeichnet, dass**
a) die Schweißnaht (17) durch einen Dauerstrichlaser (13), vorzugsweise durch einen Diodenlaser, erzeugt wird, oder dass
b) die Schweißnaht (17) mit einem gepulsten Laser (13) während der Zeitdauer eines einzigen Laserpulses entlang ihrer Erstreckung erzeugt wird, und/oder dass
c) zum Erzeugen der Schweißnaht (17) ein Zusatzwerkstoff verwendet wird.

10. Verfahren nach einem der Ansprüche 6 bis 9, **dadurch gekennzeichnet, dass** die Schweißnaht (17) mit einem Laserstrahl geringerer Intensität nachbearbeitet wird, um ihr Erscheinungsbild in ästhetischer Hinsicht zu verbessern.

11. Verfahren nach einem der Ansprüche 6 und 10, **dadurch gekennzeichnet, dass** die Pulsdauer, die Pulsenergie, die Pulsleistung, der Durchmesser des bestrahlten Bereichs und/oder die Verfahrgeschwindigkeit des Laserstrahls relativ zu den zu verschweißenden Elementen angepasst und optimiert wird/werden.

## Claims

1. Device comprising a spectacles element embodied as an earpiece (5) or as a middle part (3) of spectacles (1) and a hinge part (9,11), **characterized in that** the hinge part (9, 11) is arranged on the spectacles element and is attached by laser heat conduction welding, in particular seam welding, wherein at least one continuous weld (17), which is produced continuously along its extension by laser heat conduction welding, is formed at least on a longitudinal edge (16) of the hinge part (9, 11) for fastening it, wherein the at least one continuous weld (17) includes no welding bead, and wherein the at least one continuous weld (17) is produced along its extension with substantially constant power and/or intensity of a laser beam (15) producing the weld (17), wherein
a) the hinge part (9, 11) and/or the spectacles element comprise(s) nickel silver, preferably consist of nickel silver, and/or that
b) the hinge part (9, 11) and/or the spectacles element comprises INOX or titanium, preferably consist of INOX or titanium.

2. Device according to claim 1, **characterized in that** the weld (17) has an appearance resembling that of a soldered seam.

3. Device according to any one of the preceding claims, **characterized in that**
a) the hinge part (9, 11) has an open base, and/or that
b) the first hinge part (9, 11) is premountable.

4. Device according to any one of the preceding claims, **characterized in that** the hinge part (9, 11) is a spring hinge.

5. Spectacles, comprising
- a middle part (3) and
- at least one earpiece (5), wherein
- the at least one earpiece (5) is pivotably connected to the middle part (3) by a hinge (7) and wherein
- the hinge (7) comprises two hinge parts (9, 11), a first hinge part (9) of which is arranged on the at least one earpiece (5) and a second hinge part (11) of which is arranged on the middle part (3),
**characterized in that**
at least one of the hinge parts (9, 11) is attached to the middle part (3) or to the earpiece (5), wherein the at least one hinge part (9, 11) together with the middle part (3) or the earpiece (5) is configured as device according to any one of claims 1 to 4.

6. Method for attaching a hinge part (9, 11) to a spectacles element, comprising the following steps:
- arranging the hinge part (9, 11) on the spectacles element;
- fastening the hinge part (9, 11) to the spectacles element by producing at least one continuous weld (17), at least along a longitudinal edge (16) of the hinge part (9, 11), wherein
- the weld (17) is produced by laser heat conduction welding continuously along its extension without a welding bead, wherein
- a power and/or intensity of a laser beam (15) producing the weld (17) along an extension of the weld (17) to be produced is maintained substantially constant, wherein
a) a material comprising nickel silver, preferably consisting of nickel silver, is used as the material of the hinge part (9, 11) and/or the spectacles element, and/or that
b) a material comprising INOX or titanium, preferably consisting of INOX or titanium, is used as the material of the hinge part (9, 11) and/or the spectacles element.

7. Method according to claim 6, **characterized in that** the weld (17) is produced in such a way that it has an appearance resembling that of a soldered seam.

8. Method according to any one of claims 6 and 7, **characterized in that** the hinge part (9, 11) is premounted before being arranged on the spectacles element.

9. Method according to any one of claims 6 to 8, **characterized in that**
a) the weld (17) is produced using a continuous-wave laser (13), preferably a diode laser, or that
b) the weld (17) is produced using a pulsed laser (13) during the duration of a single laser pulse along its extension, and/or that
c) a filler material is used to produce the weld (17).

10. Method according to one of claims 6 to 9, **characterized in that** the weld (17) is finished using a laser beam of a lower intensity to improve its appearance from an aesthetic standpoint.

11. Method according to one of claims 6 and 10, **characterized in that** the pulse duration, the pulse energy, the pulse power, the diameter of the irradiated area and/or the movement speed of the laser beam is/are adjusted and optimized in relation to the elements to be welded.

## Revendications

1. Dispositif comprenant un élément de lunette formé en tant que branche (5) ou partie médiane (3) d'une lunette (1) et une partie de charnière (9, 11), **caractérisé en ce que** la partie de charnière (9, 11) est disposée sur l'élément de lunette et est fixée par des soudures au laser thermo-conductrices, en particulier des soudures en cordon, dans lequel au moins un cordon de soudure (17) continu est formé au moins sur un bord longitudinal (16) de la partie de charnière (9, 11) pour sa fixation, lequel est produit par des soudures au laser thermo-conductrices en continu le long de sa extension, dans lequel l'au moins un cordon de soudure (17) continu ne présente pas de chenille de soudure, et dans lequel l'au moins un cordon de soudure (17) continu est produit le long de sa extension avec une puissance et/ou une intensité essentiellement constante(s) d'un faisceau laser (15) produisant le cordon de soudure (17), dans lequel
a) la partie de charnière (9, 11) et/ou l'élément de lunette comprend du maillechort, est composé de préférence de maillechort, et/ou que
b) la partie de charnière (9, 11) et/ou l'élément de lunette comprend de INOX ou du titane, est composé de préférence d'INOX ou de titane.

2. Dispositif selon la revendication 1, **caractérisé en ce que** le cordon de soudure (17) présente une apparence qui ressemble à un cordon de brasage.

3. Dispositif selon l'une des revendications précédentes, **caractérisé en ce que**
a) la partie de charnière (9, 11) présente un fond ouvert, et/ou que
b) la partie de charnière (9, 11) est prémontable.

4. Dispositif selon l'une des revendications précédentes, **caractérisé en ce que** la partie de charnière (9, 11) est une charnière à ressort.

5. Lunette comprenant
- une partie médiane (3) et
- au moins une branche (5), dans lequel
- au moins une branche (5), dans lequel- l'au moins une branche (5) est reliée pivotante avec la partie médiane (3) par une charnière (7), et dans lequel
- la charnière (7) présente deux parties de charnière (9, 11), desquelles une première (9) est disposée sur l'au moins une branche (5) et dont la seconde (11) est disposée sur la partie médiane (3),
**caractérisé en ce**
**qu'**au moins une des parties de charnière (9, 11) est fixée sur la partie médiane (3) ou sur la branche (5), dans lequel l'au moins une partie de charnière (9, 11) est formée avec la partie médiane (3) ou la branche (5) en tant que dispositif selon l'une des revendications 1 à 4.

6. Procédé de fixation d'une partie de charnière (9, 11) sur un élément de lunette, comprenant les étapes suivantes :
- agencement de la partie de charnière (9, 11) sur l'élément de lunette ;
- fixation de la partie de charnière (9, 11) sur l'élément de lunette par production d'au moins un cordon de soudure (17) continu au moins sur un bord longitudinal (16) de la partie de charnière (9, 11), dans lequel
- le cordon de soudure (17) est produit de façon continue le long de sa extension par une soudure au laser thermo-conductrice sans chenille de soudure, dans lequel
- une puissance et/ou une intensité d'un faisceau laser (15) produisant le cordon de soudure (17) est maintenue essentiellement constante le long d'une extension du cordon de soudure (17) à produire, dans lequel
a) en tant que matériau pour la partie de charnière (9, 11) et/ou l'élément de lunette, on emploie un matériau qui contient du maillechort, est composé de préférence de maillechort et/ou que
b) en tant que matériau pour la partie de charnière (9, 11) et/ou l'élément de lunette, on emploie un matériau qui contient de INOX ou du titane, est composé de préférence d'INOX ou de titane.

7. Procédé selon la revendication 6, **caractérisé en ce que** le cordon de soudure (17) est ainsi produit qu'il présente une apparence qui ressemble à un cordon de brasage.

8. Procédé selon la revendication 6 et 7, **caractérisé en ce que** la partie de charnière (9, 11) est prémontée avant l'agencement sur l'élément de lunette.

9. Procédé selon l'une des revendications 6 à 8, **caractérisé en ce que**
a) le cordon de soudure (17) est produit par un laser à mode continu (13), de préférence par un laser à diodes, ou que
b) le cordon de soudure (17) est produit par un laser pulsé (13) pendant la durée d'une seule impulsion laser le long de sa extension et/ou que
c) pour produire le cordon de soudure (17), on emploie une substance supplémentaire.

10. Procédé selon l'une des revendications 6 à 9, **caractérisé en ce que** le cordon de soudure (17) est usiné avec un faisceau laser de plus faible intensité pour améliorer son apparence du point de vue esthétique.

11. Procédé selon l'une des revendications 6 et 10, **caractérisé en ce que** la durée d'impulsion, l'énergie d'impulsion, la puissance d'impulsion, le diamètre de la zone rayonnée et/ou la vitesse de déplacement du faisceau laser est/sont adaptée(s) et optimisée(s) par rapport aux éléments à souder.
